(19) Europäisches Patentamt
European Patent Office
Office européen des brevets

(11) **EP 3 981 812 B1**

(12) **EUROPEAN PATENT SPECIFICATION**

(45) Date of publication and mention
of the grant of the patent:
**16.10.2024 Bulletin 2024/42**

(21) Application number: **20817740.2**

(22) Date of filing: **15.05.2020**

(51) International Patent Classification (IPC):
**C08F 297/04** (2006.01)    **H01M 4/13** (2010.01)
**H01M 4/139** (2010.01)    **H01M 4/62** (2006.01)
**C08J 3/07** (2006.01)    **C09D 151/00** (2006.01)
**C09D 153/02** (2006.01)    **C08F 287/00** (2006.01)

(52) Cooperative Patent Classification (CPC):
(C-Sets available)
**C08F 297/044; C08F 287/00; C08F 297/046;
C08J 3/07; C09D 151/006; C09D 153/02;
H01M 4/133; H01M 4/622;** C08J 2351/00;
C08J 2353/02; H01M 10/0525; Y02E 60/10    (Cont.)

(86) International application number:
**PCT/JP2020/019521**

(87) International publication number:
**WO 2020/246222 (10.12.2020 Gazette 2020/50)**

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

BINDERZUSAMMENSETZUNG FÜR ELEKTRODE EINER WASSERFREIEN SEKUNDÄRBATTERIE, SCHLÄMMEZUSAMMENSETZUNG FÜR ELEKTRODE EINER WASSERFREIEN SEKUNDÄRBATTERIE, ELEKTRODE EINER WASSERFREIEN SEKUNDÄRBATTERIE UND WASSERFREIE SEKUNDÄRBATTERIE

COMPOSITION DE LIANT POUR ÉLECTRODE DE BATTERIE RECHARGEABLE À ÉLECTROLYTE NON AQUEUX, COMPOSITION DE SUSPENSION ÉPAISSE POUR ÉLECTRODE DE BATTERIE RECHARGEABLE À ÉLECTROLYTE NON AQUEUX, ÉLECTRODE DE BATTERIE RECHARGEABLE À ÉLECTROLYTE NON AQUEUX ET BATTERIE RECHARGEABLE À ÉLECTROLYTE NON AQUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.06.2019 JP 2019105582**

(43) Date of publication of application:
**13.04.2022 Bulletin 2022/15**

(73) Proprietor: **Zeon Corporation**
**Tokyo 100-8246 (JP)**

(72) Inventors:
• **SONO, Masayo**
  **Tokyo 100-8246 (JP)**

• **AKABANE, Tetsuya**
  **Tokyo 100-8246 (JP)**

(74) Representative: **Maiwald GmbH**
**Elisenhof**
**Elisenstraße 3**
**80335 München (DE)**

(56) References cited:
**EP-A1- 3 412 708        WO-A1-2017/195784
WO-A1-2018/168420        WO-A1-2018/168661
WO-A1-2019/039560        JP-A- 2011 065 929
JP-A- 2011 108 553**

(52)   Cooperative Patent Classification (CPC): (Cont.)

C-Sets
**C08F 287/00, C08F 220/06**

C-Sets
**C08F 287/00, C08F 220/06**

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery, such as a lithium ion secondary battery, generally includes a current collector and an electrode mixed material layer formed on the current collector. The electrode mixed material layer is formed, for example, by applying, onto the current collector, a slurry composition in which an electrode active material, a binder-containing binder composition, and so forth are dispersed in a dispersion medium, and drying the applied slurry composition.

In recent years, there have been attempts to improve binder compositions used in the formation of electrode mixed material layers in order to further improve secondary battery performance.

As one specific example, Patent Literature (PTL) 1 proposes a technique for increasing peel strength of an electrode for a secondary battery and improving battery characteristics such as high-temperature cycle characteristics by using a binder composition that contains a particulate polymer A having a volume-average particle diameter of not less than 0.6 $\mu$m and not more than 2.5 $\mu$m and a particulate polymer B having a volume-average particle diameter of not less than 0.01 $\mu$m and not more than 0.5 $\mu$m in a specific content ratio.

CITATION LIST

Patent Literature

PTL 1: WO2017/056404A1

SUMMARY

(Technical Problem)

However, there has been demand for further improvement of secondary battery performance in recent years, and there is also room for improvement of the conventional binder composition described above in terms of increasing peel strength of an electrode that is produced using the binder composition while also reducing internal resistance of a non-aqueous secondary battery that includes the electrode. Moreover, the heat resistance of an electrode obtained using the conventional binder composition described above may be insufficient, and there have been instances in which a problem of peeling of an electrode mixed material layer from a current collector at high temperature has occurred in such an electrode.

Accordingly, one object of the present disclosure is to provide a binder composition for a non-aqueous secondary battery electrode and a slurry composition for a non-aqueous secondary battery electrode with which it is possible to form an electrode for a non-aqueous secondary battery that has excellent peel strength and heat resistance and that can reduce internal resistance of a non-aqueous secondary battery.

Another object of the present disclosure is to provide an electrode for a non-aqueous secondary battery that has excellent peel strength and heat resistance and that can reduce internal resistance of a non-aqueous secondary battery.

Yet another object of the present disclosure is to provide a non-aqueous secondary battery having reduced internal resistance.

(Solution to Problem)

The inventors conducted diligent investigation with the aim of solving the problems set forth above. The inventors discovered that by using a binder composition containing water and a particulate polymer that has a specific chemical composition and that has a volume-average particle diameter and a particle size distribution that are within specific ranges, it is possible to form an electrode having excellent peel strength and heat resistance and a non-aqueous secondary battery having reduced internal resistance. In this manner, the inventors completed the present disclosure.

Specifically, the present disclosure aims to advantageously solve the problems set forth above, and a presently disclosed binder composition for a non-aqueous secondary battery electrode comprises: a particulate polymer formed of a polymer that includes a block region formed of an aromatic vinyl monomer unit and that includes either or both of an aliphatic conjugated diene monomer unit and an alkylene structural unit; and water, wherein the particulate polymer has a volume-average particle diameter of not less than 0.1 μm and less than 0.9 μm, and the particulate polymer has a particle size distribution of not less than 3 and not more than 10. An electrode having excellent peel strength and heat resistance can be produced well through a slurry composition obtained using a binder composition that contains water and a particulate polymer that includes a block region formed of an aromatic vinyl monomer unit, that includes either or both of an aliphatic conjugated diene monomer unit and an alkylene structural unit, and that has a volume-average particle diameter and a particle size distribution that are within the ranges set forth above in this manner. Moreover, internal resistance of a secondary battery can be reduced through an electrode that is produced in this manner.

Note that a "monomer unit" of a polymer referred to in the present disclosure is a "repeating unit derived from the monomer that is included in a polymer obtained using the monomer".

Moreover, when a polymer is said to "include a block region formed of a monomer unit" in the present disclosure, this means that "a section where only such monomer units are bonded in a row as repeating units is present in the polymer".

Furthermore, the "volume-average particle diameter" referred to in the present disclosure is the "particle diameter (D50) at which, in a particle size distribution (by volume) measured by laser diffraction, cumulative volume calculated from a small diameter end of the distribution reaches 50%".

Also, the "particle size distribution" referred to in the present disclosure is the "ratio (D90/D10) of the particle diameter (D90) at which cumulative volume reaches 90% and the particle diameter (D10) at which cumulative volume reaches 10% when cumulative volume is calculated from a small diameter end of a particle size distribution (by volume) measured by laser diffraction".

In the presently disclosed binder composition for a non-aqueous secondary battery electrode, it is preferable that the volume-average particle diameter is not less than 0.2 μm and less than 0.7 μm and that the particle size distribution is not less than 3.2 and not more than 8. When the volume-average particle diameter and the particle size distribution of the particulate polymer contained in the binder composition are within the ranges set forth above, peel strength and heat resistance of an electrode can be further improved, and internal resistance of a non-aqueous secondary battery can be further reduced.

The presently disclosed binder composition for a non-aqueous secondary battery electrode preferably further comprises not less than 2 parts by mass and not more than 6 parts by mass of an emulsifier per 100 parts by mass of the particulate polymer. When the content of an emulsifier in the binder composition is within the range set forth above, peel strength and heat resistance of an electrode can be further improved, and internal resistance of a non-aqueous secondary battery can be further reduced.

Note that the "content of an emulsifier in the binder composition" referred to in the present disclosure can be measured using a method described in the EXAMPLES section of the present specification.

In the presently disclosed binder composition for a non-aqueous secondary battery electrode, the aromatic vinyl monomer unit preferably constitutes a proportion of 10 mass% or more in the polymer. When the proportion constituted by the aromatic vinyl monomer unit in the polymer of the binder composition is not less than the value set forth above, peel strength and heat resistance of an electrode can be further improved.

Note that the "proportion constituted by the aromatic vinyl monomer unit in the polymer" referred to in the present disclosure can be measured using a nuclear magnetic resonance (NMR) method such as $^1$H-NMR.

The presently disclosed binder composition for a non-aqueous secondary battery electrode preferably further comprises either or both of a hindered phenol antioxidant and a phosphite antioxidant. When the binder composition contains a hindered phenol antioxidant and/or a phosphite antioxidant, peel strength and heat resistance of an electrode can be further improved.

The presently disclosed binder composition for a non-aqueous secondary battery electrode preferably further comprises a water-soluble polymer. When the binder composition contains a water-soluble polymer, peel strength of an electrode can be further improved.

Moreover, the present disclosure aims to advantageously solve the problems set forth above, and a presently disclosed slurry composition for a non-aqueous secondary battery electrode comprises: an electrode active material; and any one of the binder compositions for a non-aqueous secondary battery electrode set forth above. Through a slurry composition that contains an electrode active material and any one of the binder compositions set forth above in this manner, it is possible to produce an electrode having excellent peel strength and heat resistance. Moreover, internal resistance of a non-aqueous secondary battery can be reduced through an electrode that is produced in this manner.

Furthermore, the present disclosure aims to advantageously solve the problems set forth above, and a presently disclosed electrode for a non-aqueous secondary battery comprises an electrode mixed material layer formed using the slurry composition for a non-aqueous secondary battery electrode set forth above. An electrode that includes an electrode mixed material layer obtained using a slurry composition containing an electrode active material and any one of the binder compositions set forth above in this manner has excellent peel strength and heat resistance and can reduce internal resistance of a non-aqueous secondary battery.

Also, the present disclosure aims to advantageously solve the problems set forth above, and a presently disclosed non-aqueous secondary battery comprises the electrode for a non-aqueous secondary battery set forth above. A non-aqueous secondary battery having reduced internal resistance can be produced by using the electrode for a non-aqueous secondary battery set forth above in this manner.

(Advantageous Effect)

According to the present disclosure, it is possible to provide a binder composition for a non-aqueous secondary battery electrode and a slurry composition for a non-aqueous secondary battery electrode with which it is possible to form an electrode for a non-aqueous secondary battery that has excellent peel strength and heat resistance and that can reduce internal resistance of a non-aqueous secondary battery.

Moreover, according to the present disclosure, it is possible to provide an electrode for a non-aqueous secondary battery that has excellent peel strength and heat resistance and that can reduce internal resistance of a non-aqueous secondary battery.

Furthermore, according to the present disclosure, it is possible to provide a non-aqueous secondary battery that has reduced internal resistance.

BRIEF DESCRIPTION OF THE DRAWING

In the accompanying drawing,

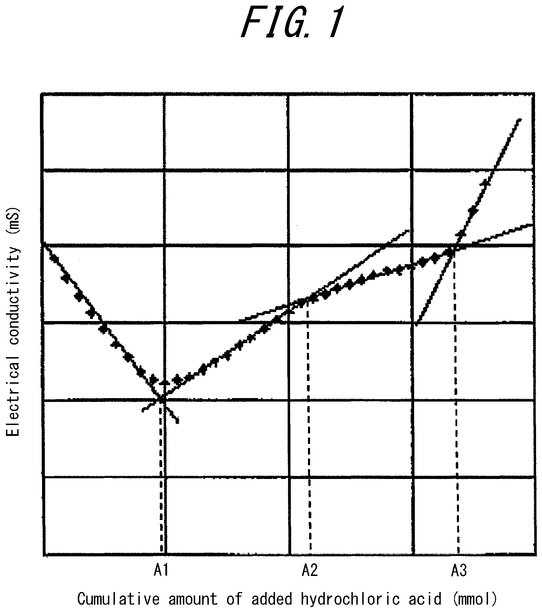

FIG. 1 is a graph illustrating a hydrochloric acid additive amount-electrical conductivity curve that is prepared when calculating the surface acid content of a particulate polymer.

DETAILED DESCRIPTION

The following provides a detailed description of embodiments of the present disclosure.

The presently disclosed binder composition for a non-aqueous secondary battery electrode can be used in production of the presently disclosed slurry composition for a non-aqueous secondary battery electrode. Moreover, the presently disclosed slurry composition for a non-aqueous secondary battery electrode can be used in formation of an electrode of a non-aqueous secondary battery such as a lithium ion secondary battery (i.e., an electrode for a non-aqueous secondary battery). A feature of the presently disclosed electrode for a non-aqueous secondary battery is that it includes an electrode mixed material layer formed from the presently disclosed slurry composition for a non-aqueous secondary battery electrode. Also, a feature of the presently disclosed non-aqueous secondary battery is that it includes an electrode for a non-aqueous secondary battery produced using the presently disclosed slurry composition for a non-aqueous secondary battery electrode.

(Binder composition for non-aqueous secondary battery electrode)

The presently disclosed binder composition contains a particulate polymer and water serving as a dispersion medium, and can optionally further contain an emulsifier, an antioxidant, a water-soluble polymer, and other components.

Features of the presently disclosed binder composition are that the aforementioned particulate polymer includes a polymer that includes a block region formed of an aromatic vinyl monomer unit and that includes either or both of an aliphatic conjugated diene monomer unit and an alkylene structural unit, and that the particulate polymer has a volume-average particle diameter of not less than 0.1 $\mu$m and less than 0.9 $\mu$m and a particle size distribution of not less than 3 and not more than 10.

As a result of the presently disclosed binder composition containing, in water, a particulate polymer that includes a block region formed of an aromatic vinyl monomer unit, that includes either or both of an aliphatic conjugated diene monomer unit and an alkylene structural unit, and that has a volume-average particle diameter and particle size distribution that are within the ranges set forth above, the binder composition can be used to produce an electrode that has excellent peel strength and heat resistance and that can reduce internal resistance of a secondary battery. Although it is not clear why the effects described above are obtained by using a binder composition that has the particulate polymer described above dispersed in water in this manner, the reason for this is presumed to be as follows.

Firstly, a polymer that forms the particulate polymer contained in the binder composition includes an aromatic vinyl monomer unit having excellent heat resistance and strength and an aliphatic conjugated diene monomer unit and/or alkylene structural unit having excellent flexibility. Moreover, the aromatic vinyl monomer unit forms a block region that is a hydrophobic region in which only such monomer units are bonded in a row and can interact well with hydrophobic sites at the surface of an electrode active material (graphite, etc.). Accordingly, the polymer that forms the particulate polymer can contribute to improving peel strength and heat resistance of an electrode due to the chemical composition thereof.

Furthermore, a significant feature of the particulate polymer contained in the binder composition is the volume-average particle diameter and the particle diameter distribution thereof, which is thought to enable achievement of the expected object of the present disclosure as described below.

Firstly, among a plurality of particles formed of the polymer that are dispersed in a particulate form, those that have a comparatively large particle diameter can form voids for movement of charge carriers inside an electrode mixed material layer through a spacer effect and can thereby inhibit an excessive increase of internal resistance of a secondary battery. On the other hand, particles having a comparatively small particle diameter fill voids in an electrode mixed material layer that are formed as described above, but have excellent binding capacity due to having a larger specific surface area, and thus can contribute to improving peel strength of an electrode and inhibiting peeling of an electrode at high temperature (i.e., improving heat resistance). Through studies conducted by the inventors, it became clear that there are suitable ranges for the volume-average particle diameter and particle size distribution of the particulate polymer in order to reduce internal resistance of a secondary battery while also improving peel strength and heat resistance of an electrode in this manner. As a result of the particulate polymer in the presently disclosed binder composition having a volume-average particle diameter and a particle size distribution that are within specific suitable ranges, the presently disclosed binder composition can be used to form an electrode mixed material layer that has voids for movement of charge carriers while also being capable of strongly adhering to a current collector.

Accordingly, an electrode that has excellent peel strength and heat resistance can be obtained by using the presently disclosed binder composition. Moreover, a secondary battery that has reduced internal resistance can be obtained through an electrode that is produced using the presently disclosed binder composition.

<Particulate polymer>

The particulate polymer is a component that functions as a binder. In an electrode mixed material layer formed on a current collector using a slurry composition that contains the binder composition, the particulate polymer holds components such as an electrode active material that are contained in the electrode mixed material layer so that these components do not detach from the electrode mixed material layer.

The particulate polymer is water-insoluble particles formed of a specific polymer. Note that when particles are referred to as "water-insoluble" in the present disclosure, this means that when 0.5 g of polymer is dissolved in 100 g of water at a temperature of 25°C, insoluble content is 90 mass% or more.

«Polymer»

The polymer forming the particulate polymer is a copolymer that includes a block region formed of an aromatic vinyl monomer unit (hereinafter, also referred to simply as an "aromatic vinyl block region") and a macromolecule chain section in which repeating units other than aromatic vinyl monomer units are linked (hereinafter, also referred to simply as the "other region"). The other region includes either or both of an aliphatic conjugated diene monomer unit and an alkylene structural unit as a repeating unit other than an aromatic vinyl monomer unit.

The aromatic vinyl block region and the other region are present adjacently in the polymer. Moreover, the polymer may include just one aromatic vinyl block region or may include a plurality of aromatic vinyl block regions. Likewise, the polymer may include just one other region or may include a plurality of other regions.

[Aromatic vinyl block region]

The aromatic vinyl block region is a region that only includes an aromatic vinyl monomer unit as a repeating unit as previously described.

A single aromatic vinyl block region may be composed of just one type of aromatic vinyl monomer unit or may be composed of a plurality of types of aromatic vinyl monomer units, but is preferably composed of just one type of aromatic vinyl monomer unit.

Moreover, a single aromatic vinyl block region may include a coupling moiety (i.e., aromatic vinyl monomer units composing a single aromatic vinyl block region may be linked via a coupling moiety).

In a case in which the polymer includes a plurality of aromatic vinyl block regions, the types and proportions of aromatic vinyl monomer units composing these aromatic vinyl block regions may be the same or different for each of the aromatic vinyl block regions, but are preferably the same.

Examples of aromatic vinyl monomers that can form a constituent aromatic vinyl monomer unit of the aromatic vinyl block region in the polymer include aromatic monovinyl compounds such as styrene, styrene sulfonic acid and salts thereof, α-methylstyrene, p-t-butylstyrene, butoxystyrene, vinyltoluene, chlorostyrene, and vinylnaphthalene. Of these aromatic vinyl monomers, styrene is preferable from a viewpoint of causing even better interaction of the aromatic vinyl block region of the polymer with hydrophobic sites at the surface of an electrode active material and further improving peel strength and heat resistance of an electrode. Note that although one aromatic vinyl monomer may be used individually or two or more aromatic vinyl monomers may be used in combination, it is preferable that one aromatic vinyl monomer is used individually.

The proportion constituted by an aromatic vinyl monomer unit in the polymer when the amount of all repeating units (monomer units and structural units) in the polymer is taken to be 100 mass% is preferably 10 mass% or more, and more preferably 20 mass% or more, and is preferably 50 mass% or less, more preferably 43 mass% or less, and even more preferably 40 mass% or less. When the proportion constituted by an aromatic vinyl monomer unit in the polymer is 10 mass% or more, the aromatic vinyl block region of the polymer can interact even better with an electrode active material. Consequently, peel strength and heat resistance of an electrode can be further improved. On the other hand, when the proportion constituted by an aromatic vinyl monomer unit in the polymer is 50 mass% or less, flexibility of the polymer is ensured, and peel strength and heat resistance of an electrode can be further improved. Moreover, an electrode active material and the like contained in an electrode mixed material layer can be inhibited from detaching from the electrode mixed material layer in a situation in which an electrode is cut to a desired size prior to being immersed in electrolyte solution in a production process of a secondary battery (i.e., the electrode can be provided with excellent dusting resistance).

Note that the proportion constituted by an aromatic vinyl monomer unit in the polymer is normally the same as the proportion constituted by the aromatic vinyl block region in the polymer.

[Other region]

As previously described, the other region is a region that includes only a repeating unit other than an aromatic vinyl monomer unit (hereinafter, also referred to simply as the "other repeating unit") as a repeating unit.

Note that a single other region may be composed of one type of other repeating unit or may be composed of a plurality of types of other repeating units.

Moreover, a single other region may include a coupling moiety (i.e., other repeating units composing a single other region may be linked via a coupling moiety).

Furthermore, the other region may include a graft portion and/or a cross-linked structure.

In a case in which the polymer includes a plurality of other regions, the types and proportions of other repeating units composing these other regions may be the same or different for each of the other regions.

The polymer is required to include either or both of an aliphatic conjugated diene monomer unit and an alkylene structural unit as other repeating units composing the other region. Moreover, the polymer can optionally further include repeating units other than an aliphatic conjugated diene monomer unit and an alkylene structural unit (i.e., other repeating units).

-Aliphatic conjugated diene monomer unit-

Examples of aliphatic conjugated diene monomers that can form an aliphatic conjugated diene monomer unit include conjugated diene compounds having a carbon number of 4 or more such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination. Of these aliphatic conjugated diene monomers, 1,3-butadiene and isoprene are preferable from a viewpoint of further improving heat resistance of an electrode, and 1,3-butadiene is more preferable.

The proportion constituted by an aliphatic conjugated diene monomer unit in the polymer when the amount of all repeating units (monomer units and structural units) in the polymer is taken to be 100 mass% is preferably 50 mass% or more, more preferably 53 mass% or more, and even more preferably 60 mass% or more, and is preferably 90 mass% or less, more preferably 80 mass% or less, and even more preferably 70 mass% or less. When the proportion constituted by an aliphatic conjugated diene monomer unit in the polymer is 50 mass% or more, flexibility of the polymer is ensured, and peel strength and heat resistance of an electrode can be further improved. On the other hand, when the proportion constituted by an aliphatic conjugated diene monomer unit in the polymer is 90 mass% or less, peel strength and heat resistance of an electrode can be sufficiently ensured.

Note that an aliphatic conjugated diene monomer unit in the polymer may be cross-linked (i.e., the polymer may include a structural unit obtained through cross-linking of an aliphatic conjugated diene monomer unit as an aliphatic conjugated diene monomer unit). Thus, the polymer forming the particulate polymer may be a polymer obtained through cross-linking of a polymer that includes an aliphatic conjugated diene monomer unit and a block region formed of an aromatic vinyl monomer unit.

The cross-linking can be performed using a radical initiator such as a redox initiator that is a combination of an oxidant and a reductant, for example, but is not specifically limited to being performed in this manner. Examples of oxidants that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reductants that can be used include compounds that include a metal ion in a reduced state such as ferrous sulfate and copper(I) naphthenate; sulfonic acid compounds such as sodium methanesulfonate; and amine compounds such as dimethylaniline. One of these organic peroxides or reductants may be used individually, or two or more of these organic peroxides or reductants may be used in combination.

Note that the cross-linking may be performed in the presence of a crosslinker such as a polyvinyl compound (divinylbenzene, etc.), a polyallyl compound (diallyl phthalate, triallyl trimellitate, diethylene glycol bis(allyl carbonate), etc.), or any of various glycols (ethylene glycol diacrylate, etc.). Moreover, the cross-linking can be performed through irradiation with active energy rays such as γ-rays.

-Alkylene structural unit-

An alkylene structural unit is a repeating unit that is composed of only an alkylene structure represented by a general formula: $-C_nH_{2n}-$ (n is an integer of 2 or more).

Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which an alkylene structural unit is introduced into the polymer. A method in which the polymer is obtained by hydrogenating a polymer including an aliphatic conjugated diene monomer unit and a block region formed of an aromatic vinyl monomer unit in order to convert the aliphatic conjugated diene monomer unit to an alkylene structural unit, for example, is preferable in terms of ease of production of the polymer.

The aliphatic conjugated diene monomer used in this method may, for example, be any of the conjugated diene compounds having a carbon number of 4 or more that were previously described as aliphatic conjugated diene monomers that can form an aliphatic conjugated diene monomer unit, of which, isoprene and 1,3-butadiene are preferable from a viewpoint of further improving heat resistance of an electrode mixed material layer, and 1,3-butadiene is more preferable. In other words, the alkylene structural unit is preferably a structural unit obtained through hydrogenation of an aliphatic conjugated diene monomer unit (i.e., is preferably a hydrogenated aliphatic conjugated diene unit), is more preferably a structural unit obtained through hydrogenation of a 1,3-butadiene unit and/or an isoprene unit (i.e., is more preferably a hydrogenated 1,3-butadiene unit and/or a hydrogenated isoprene unit), and is even more preferably a structural unit obtained through hydrogenation of a 1,3-butadiene unit (i.e., is even more preferably a hydrogenated 1,3-butadiene unit). Selective hydrogenation of an aliphatic conjugated diene monomer unit can be carried out by a commonly known method such as an oil-layer hydrogenation method or a water-layer hydrogenation method.

The total amount of an aliphatic conjugated diene monomer unit and an alkylene structural unit in the polymer when the amount of all repeating units (monomer units and structural units) in the polymer is taken to be 100 mass% is preferably 50 mass% or more, more preferably 53 mass% or more, and even more preferably 60 mass% or more, and is preferably 90 mass% or less, more preferably 80 mass% or less, and even more preferably 70 mass% or less. When the total proportion constituted by an aliphatic conjugated diene monomer unit and an alkylene structural unit in the polymer is 50 mass% or more, flexibility of the polymer is ensured, and peel strength and heat resistance of an electrode can be further improved. On the other hand, when the total proportion constituted by an aliphatic conjugated diene monomer unit and an alkylene structural unit in the polymer is 90 mass% or less, peel strength and heat resistance of an electrode can be sufficiently ensured.

The other region of the polymer may include repeating units other than the aliphatic conjugated diene monomer unit and the alkylene structural unit described above. Specifically, the other region of the polymer may include other monomer units such as an acidic group-containing monomer unit (carboxyl group-containing monomer unit, sulfo group-containing monomer unit, hydroxyl group-containing monomer unit, phosphate group-containing monomer unit, etc.), a nitrile group-containing monomer unit (acrylonitrile unit, methacrylonitrile unit, etc.), and a (meth)acrylic acid ester monomer unit (acrylic acid alkyl ester unit, methacrylic acid alkyl ester unit, etc.). In the present disclosure, "(meth)acrylic acid" is used to indicate "acrylic acid" and/or "methacrylic acid".

Of these other monomer units, the inclusion of an acidic group-containing monomer unit in the other region of the polymer is preferable from a viewpoint of further improving peel strength of an electrode and cycle characteristics of a secondary battery.

The acidic group included in an acidic group-containing monomer unit may be a carboxyl group, a sulfo group, a hydroxyl group, or a phosphate group, for example. The other region of the polymer may include only one of these types of acidic groups or may include two or more of these types of acidic groups. From a viewpoint of further improving peel strength of an electrode and cycle characteristics of a secondary battery, the acidic group included in an acidic group-containing monomer unit is preferably a carboxyl group or a hydroxyl group, and is more preferably a carboxyl group.

Note that the acidic group of an acidic group-containing monomer unit may form a salt with an alkali metal, ammonia, or the like.

Examples of carboxyl group-containing monomers that can form a carboxyl group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

An acid anhydride that produces a carboxyl group through hydrolysis can also be used as a carboxyl group-containing monomer.

Furthermore, an ethylenically unsaturated polybasic carboxylic acid such as butene tricarboxylic acid, a partial ester of an ethylenically unsaturated polybasic carboxylic acid such as monobutyl fumarate or mono-2-hydroxypropyl maleate, or the like can be used as a carboxyl group-containing monomer.

Examples of sulfo group-containing monomers that can form a sulfo group-containing monomer unit include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of hydroxyl group-containing monomers that can form a hydroxyl group-containing monomer unit include hydroxyl group-containing monomers such as 2-hydroxyethyl acrylate, 2-hydroxypropyl acrylate, 2-hydroxyethyl methacrylate, and 2-hydroxypropyl methacrylate.

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the acidic group-containing monomers described above may be used individually, or two or more of the acidic group-containing monomers described above may be used in combination. From a viewpoint of further improving peel strength of an electrode and cycle characteristics of a secondary battery, it is preferable to use methacrylic acid, acrylic acid, itaconic acid, or 2-hydroxyethyl acrylate, more preferable to use methacrylic acid, acrylic acid, or itaconic acid, and even more preferable to used methacrylic acid as an acidic group-containing monomer that can form an acidic group-containing monomer unit.

In a case in which the polymer includes an acidic group-containing monomer unit, the surface acid content of the particulate polymer is preferably 0.02 mmol/g or more, more preferably 0.05 mmol/g or more, and even more preferably 0.1 mmol/g or more, and is preferably 2.0 mmol/g or less, more preferably 1.5 mmol/g or less, and even more preferably 1.3 mmol/g or less. When the surface acid content of the particulate polymer is within any of the ranges set forth above, peel strength of an electrode and cycle characteristics of a secondary battery can be further improved.

Note that the "surface acid content" of a particulate polymer referred to in the present disclosure is the surface acid content per 1 g of solid content of the particulate polymer and can be measured using a method described in the EXAMPLES section of the present specification.

Other monomers units such as the acidic group-containing monomer unit, nitrile group-containing monomer unit, and (meth)acrylic acid ester monomer unit described above can be introduced into the polymer using any polymerization method, such as graft polymerization, without any specific limitations. Note that in a case in which another monomer unit is introduced by graft polymerization, the polymer includes a graft portion and has a structure in which a polymer constituting the graft portion is bonded to a polymer constituting a backbone portion.

The graft polymerization can be performed by a known graft polymerization method without any specific limitations. Specifically, the graft polymerization can be performed using a radical initiator such as a redox initiator that is a combination of an oxidant and a reductant, for example. Note that a known addition method such as single batch addition, split addition, or continuous addition can be adopted as the method by which the oxidant and the reductant are added.

The oxidant and the reductant can be the same as any of the previously described oxidants and reductants that can be used in cross-linking of a polymer that includes an aliphatic conjugated diene monomer unit and a block region formed of an aromatic vinyl monomer unit.

Moreover, in a case in which graft polymerization using a redox initiator is to be performed with respect to a polymer that includes an aliphatic conjugated diene monomer unit and a block region formed of an aromatic vinyl monomer unit, introduction of another monomer unit through graft polymerization and aliphatic conjugated diene monomer unit cross-linking can be caused to proceed concurrently. Note that graft polymerization and cross-linking do not have to be caused to proceed concurrently, and the type of radical initiator and the reaction conditions may be adjusted such that only graft polymerization proceeds.

[Volume-average particle diameter]

The volume-average particle diameter of the particulate polymer that is used is required to be not less than 0.1 $\mu$m and less than 0.9 $\mu$m. Moreover, the volume-average particle diameter of the particulate polymer is preferably 0.2 $\mu$m or more, and more preferably 0.3 $\mu$m or more, and is preferably less than 0.7 $\mu$m, and more preferably less than 0.6 $\mu$m. When the volume-average particle diameter of the particulate polymer is less than 0.1 $\mu$m, internal resistance of a secondary battery increases. On the other hand, when the volume-average particle diameter of the particulate polymer is 0.9 $\mu$m or more, peel strength and heat resistance of an electrode cannot be sufficiently ensured.

Moreover, when the volume-average particle diameter of the particulate polymer is not less than 0.3 $\mu$m and less than 0.6 $\mu$m, an electrode active material and the like contained in an electrode mixed material layer can be inhibited from detaching from the electrode mixed material layer in a situation in which an electrode is cut to a desired size prior to being immersed in electrolyte solution in a production process of a secondary battery (i.e., the electrode can be provided with excellent dusting resistance).

Note that the volume-average particle diameter of the particulate polymer can be adjusted by, for example, altering the amounts (concentrations) of polymer and emulsifier in a preliminary mixture used in phase-inversion emulsification in the subsequently described emulsification step. Specifically, reducing the amount (concentration) of polymer in the preliminary mixture can reduce the volume-average particle diameter of the particulate polymer that is obtained through phase-inversion emulsification. Increasing the amount (concentration) of emulsifier in the preliminary mixture can also reduce the volume-average particle diameter of the particulate polymer that is obtained through phase-inversion emulsification.

[Particle size distribution]

The particle size distribution of the particulate polymer that is used is required to be not less than 3 and not more than 10. Moreover, the particle size distribution of the particulate polymer is preferably 3.2 or more, more preferably 3.4 or more, and even more preferably 3.5 or more, and is preferably 8 or less, more preferably 5.5 or less, and even more preferably 5 or less. When the particle size distribution of the particulate polymer is less than 3, peel strength of an electrode decreases. On the other hand, when the particle size distribution of the particulate polymer is more than 10, heat resistance of an electrode cannot be sufficiently ensured.

Note that the particle size distribution of the particulate polymer can be adjusted by, for example, altering the amount (concentration) of polymer and the type of emulsifying/dispersing device used in phase-inversion emulsification in the subsequently described emulsification step. Specifically, increasing the amount (concentration) of polymer in the preliminary mixture can increase the particle size distribution of the particulate polymer that is obtained through phase-inversion emulsification. On the other hand, using a high-pressure emulsifying/dispersing device can reduce the particle size distribution of the particulate polymer that is obtained through phase-inversion emulsification as compared to when a continuous emulsifying/dispersing device is used.

«Production method of particulate polymer»

The particulate polymer formed of the polymer described above can be produced, for example, through a step of block polymerizing the monomers described above in an organic solvent to obtain a solution of a polymer (block polymer) including an aromatic vinyl block region and either or both of an aliphatic conjugated diene monomer unit and an alkylene structural unit (block polymer solution production step), a step of adding water to the obtained block polymer solution and performing emulsification to form particles of the block polymer (emulsification step), and, optionally, a step of performing graft polymerization with respect to the particles of the block polymer (grafting step).

Note that the grafting step may be performed before the emulsification step in production of the particulate polymer. In other words, the particulate polymer may be produced by implementing a step of performing graft polymerization with respect to the obtained block polymer after the block polymer solution production step to obtain a solution of a specific polymer (grafting step) and subsequently implementing a step of adding water to the obtained solution of the specific polymer and performing emulsification to form particles of the specific polymer (emulsification step).

[Block polymer solution production step]

No specific limitations are placed on the method of block polymerization in the block polymer solution production step. For example, a block polymer can be produced by adding a second monomer component to a solution obtained through polymerization of a first monomer component differing from the second monomer component, polymerizing the second monomer component, and further repeating addition and polymerization of monomer components as necessary. An organic solvent that is used as a reaction solvent is not specifically limited and can be selected as appropriate depending on the types of monomers and so forth.

A block polymer obtained through block polymerization in this manner is preferably subjected to a coupling reaction using a coupling agent in advance of the subsequently described emulsification step. Through this coupling reaction, it is possible to cause bonding between the ends of diblock structures contained in the block polymer via the coupling agent and to thereby convert these diblock structures to a triblock structure, for example.

Examples of coupling agents that can be used in the coupling reaction include, but are not specifically limited to, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of the examples given above, dichlorodimethylsilane is preferable as the coupling agent. The coupling reaction using the coupling agent results in a coupling moiety that is derived from the coupling agent being introduced into a constituent macromolecule chain (for example, a triblock structure) of the block polymer.

Note that the block polymer solution that is obtained after the block polymerization and optional coupling reaction described above may be subjected to the subsequently described emulsification step in that form or may be subjected to the emulsification step after the block polymer has, as necessary, been hydrogenated as previously described or had a subsequently described antioxidant added thereto.

[Emulsification step]

Although no specific limitations are placed on the method of emulsification in the emulsification step, a method in which phase-inversion emulsification is performed with respect to a preliminary mixture of the block polymer solution obtained in the block polymer solution production step described above and an aqueous solution of an emulsifier is preferable, for example.

As previously described, the volume-average particle diameter of the particulate polymer that is obtained can be adjusted by, for example, altering the amounts (concentrations) of the block polymer and emulsifier in the preliminary mixture that is used in phase-inversion emulsification. Also, as previously described, the particle size distribution of the obtained particulate polymer can be adjusted by, for example, altering the concentration of the block polymer in the preliminary mixture and/or the type of emulsifying/dispersing device used in phase-inversion emulsification. The concentration of the block polymer in the preliminary mixture is not specifically limited but is preferably 1 mass% or more, and more preferably 3 mass% or more, and is preferably 25 mass% or less, and more preferably 15 mass% or less.

The number of passes (number of times that the preliminary mixture passes through the emulsifying/dispersing device) is preferably 5 or more from a viewpoint of good particle formation of the block polymer. The upper limit for the number of passes is preferably 20 or less from a viewpoint of efficiency of emulsification operation, and is more preferably 15 or less, and even more preferably 10 or less. Other conditions of the emulsification operation performed by the emulsifying/dispersing device (for example, processing temperature and processing time) may be set as appropriate so as to achieve a desired dispersion state without any specific limitations.

Note that the phase-inversion emulsification can be carried out using a known emulsifier and emulsifying/dispersing device, for example. Specific examples of emulsifying/dispersing devices that can be used include, but are not specifically limited to, batch emulsifying/dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying/dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying/dispersing devices such as a Microfluidizer (product name; produced by Mizuho Industrial Co., Ltd.), a Nanomizer (product name; produced by Nanomizer Inc.), an APV Gaulin or LAB 1000 (product name; produced by SPX FLOW, Inc.), a Star Burst (product name; produced by Sugino Corp.), or an ECONIZER (product name; produced by Sanmaru Machinery Co., Ltd.); membrane emulsifying/dispersing devices such as a Membrane Emulsifier (product name; produced by Reica Co., Ltd.); vibratory emulsifying/dispersing devices such as a Vibro Mixer (product name; produced by Reica Co., Ltd.); and ultrasonic emulsifying/dispersing devices such as an Ultrasonic Homogenizer (product name; produced by Branson).

A known method may be used to remove organic solvent from the emulsion obtained after phase-inversion emulsification as necessary, for example, so as to yield a water dispersion of a block polymer that has been formed into particles.

[Grafting step]

Although no specific limitations are placed on the method of graft polymerization in the grafting step, a method in which graft polymerization and cross-linking of the block polymer are caused to proceed concurrently in the presence of a monomer that is to be graft polymerized using a radical initiator such as a redox initiator is preferable, for example. The reaction conditions can be adjusted in accordance with the chemical composition of the block polymer and so forth.

By performing the block polymer solution production step, the emulsification step, and, optionally, the grafting step in this manner, it is possible to obtain a water dispersion of a particulate polymer that includes a block region formed of an aromatic vinyl monomer unit, that includes an aliphatic conjugated diene monomer unit and/or an alkylene structural unit, and that has a volume-average particle diameter and a particle size distribution that are within specific ranges.

<Dispersion medium>

The dispersion medium of the presently disclosed binder composition is not specifically limited so long as it includes water. For example, the presently disclosed binder composition may contain just water as the dispersion medium or may contain a mixture of water and an organic solvent (for example, an ester, a ketone, or an alcohol) as the dispersion medium. Also note that the presently disclosed binder composition may contain one organic solvent or may contain two or more organic solvents.

<Emulsifier>

The amount of an emulsifier that can optionally be contained in the presently disclosed binder composition per 100 parts by mass of the particulate polymer is preferably 2 parts by mass or more, and more preferably 3 parts by mass or more, and is preferably 6 parts by mass or less, and more preferably 5 parts by mass or less. When the content of an emulsifier in the binder composition is 2 parts by mass or more per 100 parts by mass of the particulate polymer, sufficient dispersion stability of a slurry can be ensured, and sedimentation of the slurry is inhibited. Consequently, an increase of internal resistance of a secondary battery can be inhibited. On the other hand, when the content of an emulsifier in the binder composition is 6 parts by mass or less per 100 parts by mass of the particulate polymer, peel strength of an electrode can be further improved, and internal resistance of a secondary battery can be further reduced.

Note that an emulsifier in the binder composition may be an emulsifier that was used in the previously described emulsification step (i.e., residual emulsifier) or may be an emulsifier that was added separately to the emulsifier used in the emulsification step.

Examples of emulsifiers that can be used include, but are not specifically limited to, non-ionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as salts of myristic acid, palmitic acid, oleic acid, linolenic acid, and other fatty acids, alkyl sulfonic acid salts, alkylbenzene sulfonic acid salts such as sodium dodecylbenzene sulfonate, higher alcohol sulfuric acid ester salts, and alkyl sulfosuccinic acid salts; and copolymerizable emulsifiers such as sulfoesters of α,β-unsaturated carboxylic acids, sulfate esters of α,β-unsaturated carboxylic acids, and sulfoalkyl allyl ethers. Of these emulsifiers, it is preferable to use an anionic emulsifier from a viewpoint of further improving peel strength and heat resistance of an electrode, more preferable to use an alkyl sulfonic acid salt or an alkylbenzene sulfonic acid salt, and even more preferable to use sodium dodecylbenzene sulfonate.

One of these emulsifiers may be used individually, or two or more of these emulsifiers may be used in combination.

<Antioxidant>

From a viewpoint of further improving peel strength and heat resistance of an electrode, the presently disclosed binder composition preferably contains either or both of a hindered phenol antioxidant and a phosphite antioxidant, and more preferably contains both a hindered phenol antioxidant and a phosphite antioxidant.

Examples of hindered phenol antioxidants include 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], and 2,4,6-tris(3',5'-di-tert-butyl-4'-hydroxybenzyl)mesitylene. Of these hindered phenol antioxidants, 4-[[4,6-bis(octylthio)-1,3,5-triazin-2-yl]amino]-2,6-di-tert-butylphenol and 2,6-di-tert-butyl-p-cresol are preferable from a viewpoint of inhibiting swelling of an electrode associated with repeated charging and discharging, and 4-[[4,6-bis(octylthio)-1,3,5-triazin-2-yl]amino]-2,6-di-tertbutylphenol is more preferable from a viewpoint of inhibiting swelling of an electrode associated with repeated charging and discharging while also improving peel strength of the electrode.

Examples of phosphite antioxidants include 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-di-t-butylphenyl) 2-ethylhexyl phosphite, and tris(2,4-di-tert-butylphenyl) phosphite. Of these phosphite antioxidants, 3,9-bis(octadecyloxy)-2,4,8,10-tetraoxa-3,9-diphosphaspiro[5.5]undecane and tris(2,4-di-tert-butylphenyl) phosphite are preferable from a viewpoint of inhibiting swelling of an electrode associated with repeated charging and discharging, and 3,9-bis(octadecyloxy)-2,4,8,10-tetraoxa-3,9-diphosphaspiro[5.5]undecane is more preferable from a viewpoint of inhibiting swelling of an electrode associated with repeated charging and discharging while also improving peel strength of the electrode.

One of these antioxidants may be used individually, or two or more of these antioxidants may be used in combination.

The content of a hindered phenol antioxidant in the binder composition per 100 parts by mass of the particulate polymer is preferably 0.01 parts by mass or more, more preferably 0.02 parts by mass or more, and even more preferably 0.03 parts by mass or more, and is preferably 1.5 parts by mass or less, more preferably 1.0 parts by mass or less, even more preferably 0.5 parts by mass or less, and particularly preferably 0.3 parts by mass or less. When the content of a hindered phenol antioxidant is 0.01 parts by mass or more per 100 parts by mass of the particulate polymer, peel strength and heat resistance of an electrode and also cycle characteristics of a secondary battery can be further improved, and swelling of the electrode associated with repeated charging and discharging can be inhibited. Moreover, when the content of a hindered phenol antioxidant is 1.5 parts by mass or less per 100 parts by mass of the particulate polymer, peel strength of an electrode and cycle characteristics of a secondary battery can be further improved.

The content of a phosphite antioxidant in the binder composition per 100 parts by mass of the particulate polymer is preferably 0.01 parts by mass or more, more preferably 0.05 parts by mass or more, and even more preferably 0.08 parts by mass or more, and is preferably 1.5 parts by mass or less, more preferably 0.4 parts by mass or less, even more preferably 0.3 parts by mass or less, and particularly preferably 0.2 parts by mass or less. When the content of a phosphite antioxidant is 0.01 parts by mass or more per 100 parts by mass of the particulate polymer, peel strength and heat resistance of an electrode and also cycle characteristics of a secondary battery can be further improved. Moreover, when the content of a phosphite antioxidant is 1.5 parts by mass or less per 100 parts by mass of the particulate polymer, peel strength of an electrode and cycle characteristics of a secondary battery can be further improved, and swelling of the electrode associated with repeated charging and discharging can be inhibited.

A ratio of the content of a hindered phenol antioxidant relative to the content of a phosphite antioxidant (mass ratio; hindered phenol antioxidant/phosphite antioxidant) is preferably 0.05 or more, and more preferably 0.2 or more, and is preferably 5 or less, and more preferably 3 or less. When the ratio of the content of a hindered phenol antioxidant relative to the content of a phosphite antioxidant is 0.05 or more, peel strength of an electrode and cycle characteristics of a secondary battery can be further improved, and swelling of the electrode associated with repeated charging and discharging can be inhibited. Moreover, when the ratio of the content of a hindered phenol antioxidant relative to the content of a phosphite antioxidant is 5 or less, peel strength of an electrode and cycle characteristics of a secondary battery can be further improved.

\<Water-soluble polymer\>

A water-soluble polymer that can optionally be contained in the presently disclosed binder composition is a component that enables good dispersion of components such as the previously described particulate polymer in an aqueous medium. Accordingly, the inclusion of a water-soluble polymer in the binder composition optimizes the structure of an electrode mixed material layer formed using a slurry composition that contains the binder composition and can further increase peel strength of an electrode (particularly peel strength of an electrode containing a silicon-based negative electrode active material as an electrode active material).

The weight-average molecular weight of the water-soluble polymer is preferably 1,500 or more, and more preferably 5,000 or more, and is preferably 50,000 or less, and more preferably 20,000 or less. Note that the weight-average molecular weight of a water-soluble polymer referred to in the present disclosure can be measured by gel permeation chromatography (GPC).

In the present disclosure, the term "water-soluble polymer" refers to an addition polymer that is produced through addition polymerization and is not inclusive of condensation polymers such as carboxymethyl cellulose salts.

Note that the water-soluble polymer may be in the form of a salt (salt of a water-soluble polymer). In other words, the term "water-soluble polymer" as used in the present disclosure is also inclusive of salts of water-soluble polymers.

Also note that when a polymer is referred to as "water-soluble" in the present disclosure, this means that when 0.5 g of the polymer is dissolved in 100 g of water at a temperature of 25°C, insoluble content is less than 1.0 mass%.

The water-soluble polymer preferably includes an acidic group. Examples of acidic groups that can be included in the water-soluble polymer include a carboxyl group, a sulfo group, a phosphate group, and a hydroxyl group. The water-soluble polymer may include only one of these types of acidic groups or may include two or more of these types of acidic groups.

From a viewpoint of increasing slurry composition stability and improving coating density while also inhibiting aggregation of the particulate polymer or the like during slurry composition application and further improving handleability of an electrode, a carboxyl group and a sulfo group are preferable from among these types of acidic groups, and a carboxyl group is more preferable.

No specific limitations are placed on the method by which an acidic group is introduced into the water-soluble polymer. Although a polymer may be produced through addition polymerization of a monomer including an acidic group (acidic group-containing monomer) such as previously described so as to obtain a water-soluble polymer that includes an acidic group-containing monomer unit or any addition polymer may be modified (for example, end modified) so as to obtain a water-soluble polymer that includes an acidic group such as previously described, the former of these methods is preferable. Note that the acidic group-containing monomer can be the same as any of those previously described in the "Particulate polymer" section.

The water-soluble polymer may, for example, be a polyvinyl alcohol, a polycarboxylic acid, a salt of either thereof, or the like, for example. Examples of polycarboxylic acids include polyacrylic acid and polymethacrylic acid. One of these water-soluble polymers may be used individually, or two or more of these water-soluble polymers may be used in combination in a freely selected ratio. Of these water-soluble polymers, polyacrylic acid or a salt thereof (hereinafter, also referred to simply as a "polyacrylic acid (salt)") is preferable. By using a polyacrylic acid (salt) as the water-soluble polymer, it is possible to further improve workability when a slurry composition containing the binder composition is applied onto a current collector or the like and also to further improve peel strength of an electrode.

Moreover, it is preferable that a water-soluble polymer such as a polyacrylic acid (salt) includes a carboxyl group-containing monomer unit in a proportion of not less than 50 mass% and not more than 100 mass% from a viewpoint of further improving peel strength of an electrode and cycle characteristics of a secondary battery.

In a case in which the presently disclosed binder composition contains a water-soluble polymer, the amount of the water-soluble polymer per 100 parts by mass of the particulate polymer is preferably 20 parts by mass or more, more preferably 30 parts by mass or more, and even more preferably 40 parts by mass or more, and is preferably 300 parts by mass or less, more preferably 200 parts by mass or less, and even more preferably 100 parts by mass or less. Moreover, in a situation in which a slurry composition is produced using the presently disclosed binder composition, the amount of the water-soluble polymer in the slurry composition per 100 parts by mass of an electrode active material is preferably 0.1 parts by mass or more, more preferably 0.2 parts by mass or more, and even more preferably 0.3 parts by mass or more, and is preferably 10 parts by mass or less, more preferably 5 parts by mass or less, and even more preferably 4 parts by mass or less. When the amount of the water-soluble polymer is within any of the ranges set forth above, it is possible to obtain good workability when a slurry composition produced using the binder composition is applied onto a current collector or the like and to further improve peel strength of an electrode.

<Other components>

The presently disclosed binder composition can contain components other than those described above (i.e., other components). For example, the binder composition may contain a known particulate binder (styrene butadiene random copolymer, acrylic polymer, etc.) other than the particulate polymer described above. The binder composition may also contain known additives. Examples of such known additives include defoamers, dispersants, and thickeners (excluding those corresponding to the previously described water-soluble polymer). Note that one other component may be used individually, or two or more other components may be used in combination in a freely selected ratio.

(Slurry composition for non-aqueous secondary battery electrode)

The presently disclosed slurry composition for a non-aqueous secondary battery electrode is a composition that is used for forming an electrode mixed material layer. The presently disclosed slurry composition for a non-aqueous secondary battery electrode contains an electrode active material and the presently disclosed binder composition for a non-aqueous secondary battery electrode set forth above, and optionally further contains other components. In other words, the presently disclosed slurry composition for a non-aqueous secondary battery electrode normally contains an electrode active material, the previously described particulate polymer, and a dispersion medium, and optionally further contains other components. As a result of the presently disclosed slurry composition containing the binder composition set forth above, it is possible to form an electrode having excellent peel strength and heat resistance and a non-aqueous secondary battery having reduced internal resistance by using the slurry composition.

Although the following describes, as one example, a case in which the slurry composition for a non-aqueous secondary battery electrode is a slurry composition for a lithium ion secondary battery negative electrode, the presently disclosed slurry composition for a non-aqueous secondary battery electrode is not limited to the following example.

<Electrode active material>

The electrode active material is a material that gives and receives electrons in an electrode of a secondary battery. The negative electrode active material of a lithium ion secondary battery is typically a material that can occlude and release lithium.

Specific examples of negative electrode active materials for lithium ion secondary batteries include carbon-based negative electrode active materials, metal-based negative electrode active materials, and negative electrode active materials formed by combining these materials.

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); an alloy of the simple substance of metal; and an oxide, sulfide, nitride, silicide, carbide, or phosphide of any of the preceding examples. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

Examples of the silicon-based negative electrode active material include silicon (Si), a silicon-containing alloy, SiO, $SiO_x$, and a composite material of conductive carbon and a Si-containing material obtained by coating or combining the Si-containing material with the conductive carbon. One of these silicon-based negative electrode active materials may be used individually, or two or more of these silicon-based negative electrode active materials may be used in combination.

<Binder composition>

The binder composition can be the presently disclosed binder composition that contains the previously described specific particulate polymer and a water-containing dispersion medium and that optionally further contains other components.

Note that the content of the previously described specific particulate polymer in the slurry composition can, for example, be set as not less than 0.5 parts by mass and not more than 15 parts by mass, in terms of solid content, per 100 parts by mass of the electrode active material.

<Other components>

Besides the electrode active material, the particulate polymer, and water, examples of other components that can be contained in the slurry composition include, but are not specifically limited to, the same components as can be contained in the presently disclosed binder composition. The slurry composition may further contain a conductive material such as carbon black. One of these components may be used individually, or two or more of these components may be used in combination in a freely selected ratio.

<Production of slurry composition for non-aqueous secondary battery electrode>

The slurry composition set forth above can be produced by mixing the above-described components by a known mixing method. This mixing can be performed using a mixer such as a ball mill, a sand mill, a bead mill, a pigment disperser, a grinding machine, an ultrasonic disperser, a homogenizer, a planetary mixer, or a FILMIX.

(Electrode for non-aqueous secondary battery)

The presently disclosed electrode includes an electrode mixed material layer formed using the presently disclosed slurry composition set forth above, and normally includes a current collector having the electrode mixed material layer formed thereon. The electrode mixed material layer is normally a layer obtained through drying of the presently disclosed slurry composition, normally contains at least an electrode active material and a polymer derived from the previously described particulate polymer, and optionally contains other components. Note that the polymer derived from the previously described particulate polymer may have a particulate form in the electrode mixed material layer (i.e., may be contained still in the form of a particulate polymer in the electrode mixed material layer) or may have any other form in the electrode mixed material layer.

The presently disclosed electrode has excellent peel strength and heat resistance as a result of being produced using the presently disclosed slurry composition. Moreover, a secondary battery including the electrode has reduced internal resistance.

<Formation method of electrode>

The electrode mixed material layer of the presently disclosed electrode for a non-aqueous secondary battery can be formed by any of the following methods, for example.

(1) A method in which the presently disclosed slurry composition is applied onto the surface of the current collector and is then dried
(2) A method in which the current collector is immersed in the presently disclosed slurry composition and is then dried
(3) A method in which the presently disclosed slurry composition is applied onto a releasable substrate and is dried to produce an electrode mixed material layer that is then transferred onto the surface of the current collector

Of these methods, method (1) is particularly preferable since it allows simple control of the thickness of the electrode mixed material layer. In more detail, method (1) includes a step of applying the slurry composition onto the current collector (application step) and a step of drying the slurry composition that has been applied onto the current collector to form an electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to a pressing process, such as mold pressing or roll pressing. This pressing process improves close adherence of the electrode mixed material layer and the current collector (i.e., improves peel strength of the electrode) and enables further densification of the obtained electrode mixed material layer.

(Non-aqueous secondary battery)

The presently disclosed non-aqueous secondary battery includes the presently disclosed electrode for a non-aqueous secondary battery. More specifically, the presently disclosed non-aqueous secondary battery includes a positive electrode, a negative electrode, an electrolyte solution, and a separator, and has the presently disclosed electrode for a non-aqueous secondary battery as at least one of the positive electrode and the negative electrode. The presently disclosed non-aqueous secondary battery has reduced internal resistance as a result of including the presently disclosed electrode for a non-aqueous secondary battery.

Although the following describes, as one example, a case in which the secondary battery is a lithium ion secondary battery, the presently disclosed secondary battery is not limited to the following example.

<Electrodes>

As described above, the presently disclosed electrode for a secondary battery is used as at least one of the positive electrode and the negative electrode. In other words, the positive electrode of the lithium ion secondary battery may be the presently disclosed electrode and the negative electrode of the lithium ion secondary battery may be a known negative electrode other than the presently disclosed electrode. Alternatively, the negative electrode of the lithium ion secondary battery may be the presently disclosed electrode and the positive electrode of the lithium ion secondary battery may be a known positive electrode other than the presently disclosed electrode. Further alternatively, the positive electrode and the negative electrode of the lithium ion secondary battery may both be the presently disclosed electrode.

Note that in the case of a known electrode other than the presently disclosed electrode for a secondary battery, this electrode can be an electrode that is obtained by forming an electrode mixed material layer on a current collector by a known production method.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCh$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution may be adjusted as appropriate. Furthermore, known additives may be added to the electrolyte solution.

<Separator>

The separator is not specifically limited and can be a separator such as described in JP2012-204303A, for example. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

<Production method of non-aqueous secondary battery>

The presently disclosed non-aqueous secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. Note that at least one of the positive electrode and the negative electrode is the presently disclosed electrode for a non-aqueous secondary battery. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the proportion constituted by an aromatic vinyl monomer unit in a polymer, the volume-average particle diameter, particle size distribution, and surface acid content of a particulate polymer, the content of emulsifier and content of antioxidant in a binder composition, the dusting resistance, heat resistance, and peel strength of an electrode, and the internal resistance of a secondary battery.

<Proportion of aromatic vinyl monomer unit in polymer>

A water dispersion of a particulate polymer was coagulated in methanol and was then vacuum dried at a temperature of 100°C for 5 hours to obtain a measurement sample. Peak intensities respectively attributed to aromatic vinyl monomer units, aliphatic vinyl monomer units, alkylene structural units, and any other monomer units included in the measurement sample were calculated by $^1$H-NMR, and then a proportion (%) of the peak intensity attributed to aromatic vinyl monomer units relative to the total peak intensity was determined.

<Volume-average particle diameter of particulate polymer>

The volume-average particle diameter (D50) of a particulate polymer produced in each example or comparative example was measured using a laser diffraction particle diameter distribution analyzer (produced by Beckman Coulter, Inc.; product name: LS-230). Specifically, a water dispersion that had been adjusted to a solid content concentration of the particulate polymer of 0.1 mass% was measured in the analyzer, and the particle diameter at which, in the obtained particle size distribution (by volume), cumulative volume calculated from a small diameter end of the distribution reached 50% was determined as the volume-average particle diameter ($\mu$m).

<Particle size distribution of particulate polymer>

With respect to the particle size distribution (by volume) obtained as described above in the "Volume-average particle diameter of particulate polymer" section, a ratio (D90/D10) was determined for the particle diameter (D90) at which cumulative volume calculated from the small diameter end of the distribution reached 90% and the particle diameter (D10) at which cumulative volume calculated from the small diameter end of the distribution reached 10%.

<Surface acid content of particulate polymer>

An obtained water dispersion of a particulate polymer was diluted with 0.3% dodecylbenzene sulfonic acid aqueous solution and was adjusted to a solid content concentration of 10%. Thereafter, centrifugal separation was performed for 30 minutes at 7,000 G to collect light liquid. The obtained light liquid was diluted with 0.3% dodecylbenzene sulfonic acid aqueous solution and was adjusted to a solid content concentration of 10%. Thereafter, centrifugal separation was performed for 30 minutes at 7,000 G to collect light liquid. The obtained light liquid was diluted with 0.3% dodecylbenzene sulfonic acid aqueous solution and was adjusted to a solid content concentration of 10%. Thereafter, centrifugal separation of the adjusted sample was performed for 30 minutes at 7,000 G to collect light liquid. The obtained light liquid was adjusted to pH 12.0 with 5% sodium hydroxide aqueous solution. The pH adjusted sample, in an amount of 3.0 g in terms of solid content, was collected in a 100 mL beaker, and then 3 g of an aqueous solution of EMULGEN 120 (produced by Kao Corporation) diluted to 0.2% and 1 g of an aqueous solution of SM5512 (produced by Dow Corning Toray Co., Ltd.) diluted to 1% were added thereto. These materials were uniformly stirred by a stirrer while 0.1 N hydrochloric acid aqueous solution was added thereto at a rate of 0.5 mL/30 s and while electrical conductivity was measured at intervals of 30 seconds.

The obtained electrical conductivity data was plotted on a graph with electrical conductivity on a vertical axis (Y coordinate axis) and cumulative amount of added hydrochloric acid on a horizontal axis (X coordinate axis). In this manner, a hydrochloric acid amount-electrical conductivity curve with three inflection points such as illustrated in FIG. 1 was obtained. The X coordinates of the three inflection points were denoted as P1, P2, and P3 in order from the smallest value. Linear approximations L1, L2, and L3 were determined by the least squares method for data in three sections corresponding to X coordinates of: zero to coordinate P1; coordinate P1 to coordinate P2; and coordinate P2 to coordinate P3. An X coordinate of an intersection point of the linear approximation L1 and the linear approximation L2 was taken to be A1, and an X coordinate of an intersection point of the linear approximation L2 and the linear approximation L3 was taken to be A2.

The surface acid content per 1 g of the particulate polymer was determined as a hydrochloric acid-equivalent value (mmol/g) from the following formula (a).

(a) Surface acid content per 1 g of particulate polymer = (A2 - A1)/3.0 g

<Content of emulsifier in binder composition>

Approximately 2 g of a produced binder composition was diluted by approximately a factor of 7 with water and was then ultrasonicated while approximately 50 mL of methanol was added thereto to cause coagulation. A filtrate obtained by filtering the coagulated liquid was used as a measurement sample for measurement by high-performance liquid chromatography. Detection of emulsifier was performed using a UV detector or an RI detector. For example, detection of sodium dodecylbenzene sulfonate was performed using a UV detector (measurement wavelength: 254 nm). The emulsifier content was quantified by a calibration curve method.

<Content of antioxidant in binder composition>

Saline water of 20% in concentration was added to 10 g of a produced binder composition under stirring so as to cause coagulation of the dispersion into a powder form. Approximately 2 g of the coagulated material was washed with 100 mL of water, was separated using a filter, and was dried under reduced pressure at 40°C for 2 hours.

Extraction was then performed at 90°C for 8 hours by Soxhlet extraction using toluene as a solvent so as to obtain an extract. The obtained extract was vacuum dried at 40°C for 2 hours and was then dissolved in 5 mL of tetrahydrofuran that was added thereto. After sampling 1 mL of the resultant solution into a 10 mL volumetric flask, the solution was made up to 10 mL with tetrahydrofuran to obtain a test solution. Components having a molecular weight of 100 to 1,500 were fractionated from the produced test solution by high-performance liquid chromatography, and then the types of hindered phenol antioxidant and phosphite antioxidant were identified by fast atom bombardment (FAB). Moreover, the amount of an identified antioxidant was quantified by high-performance liquid chromatography through a calibration curve method.

<Dusting resistance of electrode>

A negative electrode produced in each example or comparative example was cut out as a square of 10 cm $\times$ 10 cm to obtain a sample. The mass (Y0) of the sample was measured. Thereafter, the sample was punched at 5 locations using a $\varnothing$16 mm circular punching machine. An airbrush was applied to both the circular samples that had been punched out and the sample having circular holes opened therein, the total mass (Y1) thereof was measured, and a dusting ratio (ratio of the mass after punching relative to the mass before punching) was determined based on the following formula. A larger value for the dusting ratio indicates that the negative electrode has better dusting resistance and that cracking and peeling of edges of the negative electrode can be reduced.

$$\text{Dusting ratio} = (Y1/Y0) \times 100 \ (\text{mass\%})$$

A: Dusting ratio of 99.98 mass% or more
B: Dusting ratio of not less than 99.97 mass% and less than 99.98 mass%
C: Dusting ratio of not less than 99.96 mass% and less than 99.97 mass%
D: Dusting ratio of less than 99.96 mass%

<Heat resistance of electrode>

A produced negative electrode was cut out as a rectangle of 100 mm in length by 50 mm and was vacuum dried at 100°C for 10 hours. The weight (W1) of the negative electrode mixed material layer before vacuum drying and the weight (W2) of the negative electrode mixed material layer remaining on copper foil after vacuum drying once peeling of the negative electrode mixed material layer from the copper foil due to vacuum drying had occurred were determined. The remaining electrode mixed material layer fraction (= (W2/W1) $\times$ 100(%)) was calculated and was evaluated by the following standard. A higher remaining electrode mixed material layer fraction indicates that the electrode has higher heat resistance.

A: Remaining electrode mixed material layer fraction of more than 90 weight%
B: Remaining electrode mixed material layer fraction of not less than 60 weight% and not more than 90 weight%
C: Remaining electrode mixed material layer fraction of less than 60 weight%

<Peel strength of electrode>

A produced negative electrode was cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z 1522 was used as the cellophane tape. Moreover, the cellophane tape was fixed to a test stage. Thereafter, one end of the current collector was pulled vertically upward at a pulling speed of 50 mm/minute to peel off the current collector, and the stress during this peeling was measured. Three measurements were made in this manner. An average value of the measurements was determined and was taken to be the peel strength. An evaluation was made by the following standard. A larger peel strength indicates that the negative electrode mixed material layer has larger binding strength to the current collector, and thus indicates larger close adherence strength.

A: Peel strength of 24 N/m or more
B: Peel strength of not less than 15 N/m and less than 24 N/m
C: Peel strength of not less than 8 N/m and less than 15 N/m
D: Peel strength of less than 8 N/m

<Internal resistance of secondary battery>

Measurement of IV resistance as described below was performed in order to evaluate internal resistance of a lithium ion secondary battery. The lithium ion secondary battery was subjected to conditioning in which it underwent 3 cycles of an operation of charging to a voltage of 4.2 V with a 0.1C charge rate, resting for 10 minutes, and subsequently CC discharging to 3.0 V with a 0.1C discharge rate at a temperature of 25°C. The lithium ion secondary battery was subsequently charged to 3.75 V at 1C (C is a value expressed by rated capacity (mA)/1 hour (h)) in a -10°C atmosphere and was then subjected to 15 seconds of charging and 15 seconds of discharging centered around 3.75 V at each of 0.5C, 1.0C, 1.5C, and 2.0C. For each of these cases, the battery voltage after 15 seconds at the charging side was plotted against a current value, and the gradient of this plot was determined as the IV resistance ($\Omega$). The obtained value ($\Omega$) for the IV resistance was evaluated by the following standard. A smaller value for the IV resistance indicates that the secondary battery has lower internal resistance.

  A: IV resistance of 5 $\Omega$ or less
  B: IV resistance of more than 5 $\Omega$ and not more than 10 $\Omega$
  C: IV resistance of more than 10 $\Omega$ and not more than 15 $\Omega$
  D: IV resistance of more than 15 $\Omega$

(Example 1)

<Production of binder composition for non-aqueous secondary battery negative electrode>

[Production of cyclohexane solution of block polymer]

A pressure-resistant reactor was charged with 233.3 kg of cyclohexane, 54.2 mmol of N,N,N',N'-tetramethylethylenediamine (hereinafter, referred to as "TMEDA"), and 30.0 kg of styrene as an aromatic vinyl monomer. These materials were stirred at 40°C while 1806.5 mmol of n-butyllithium as a polymerization initiator was added thereto, and then 1 hour of polymerization was performed under heating at 50°C. The polymerization conversion rate of styrene was 100%. Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%. Next, 722.6 mmol of dichlorodimethylsilane as a coupling agent was added into the pressure-resistant reactor and a coupling reaction was carried out for 2 hours to form a styrene-butadiene coupled block copolymer. Thereafter, 3612.9 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tertbutylphenol (H1) as a hindered phenol antioxidant and 0.09 parts of 3,9-bis(octadecyloxy)-2,4,8,10-tetraoxa-3,9-diphosphaspiro[5.5]undecane (P1) as a phosphite antioxidant were added to 100 parts of the reaction liquid (containing 30.0 parts of polymer component) and were mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a block polymer.
The collected dried product was dissolved in cyclohexane to produce a block polymer solution having a block polymer concentration of 5.0%.

[Phase-inversion emulsification]

Sodium alkylbenzene sulfonate was dissolved in deionized water to produce a 0.15% aqueous solution.
After loading 1,000 g of the obtained block polymer solution and 1,400 g of the obtained aqueous solution into a tank, preliminary mixing thereof was performed by stirring. Next, the preliminary mixture was transferred from the tank to a high-pressure emulsifying/dispersing device "LAB1000" (produced by SPX FLOW, Inc.) using a metering pump and was circulated (number of passes: 5) so as to perform phase-inversion emulsification of the preliminary mixture to obtain an emulsion.
Next, cyclohexane in the obtained emulsion was evaporated under reduced pressure in a rotary evaporator. The emulsion that had been subjected to evaporation was subsequently subjected to 10 minutes of centrifugation at 7,000 rpm in a centrifuge (produced by Hitachi Koki Co., Ltd.; product name: Himac CR21N), and then the upper layer portion was withdrawn to perform concentration.
Finally, the upper layer portion was filtered through a 100-mesh screen to obtain a water dispersion containing a particulate block polymer (block polymer latex).

[Graft polymerization and cross-linking]

Distilled water was added to dilute the obtained block polymer latex such that the amount of water was 850 parts relative to 100 parts (in terms of solid content) of the particulate block polymer. The diluted block polymer latex was loaded into a stirrer-equipped polymerization reactor that had undergone nitrogen purging and was heated to a temperature of 30°C under stirring. In addition, a separate vessel was used to produce a diluted methacrylic acid solution by mixing 4 parts of methacrylic acid as an acidic group-containing monomer and 15 parts of distilled water. The diluted methacrylic acid solution was added over 30 minutes into the polymerization reactor that had been heated to 30°C so as to add 4 parts of methacrylic acid relative to 100 parts of the block polymer.

A separate vessel was used to produce a solution (g) containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3 -tetramethylbutyl hydroperoxide (produced by NOF Corporation; product name: PEROCTA H) as an oxidant was subsequently added, and a reaction was carried out at 30°C for 1 hour and then at 70°C for 2 hours to yield a binder composition. The polymerization conversion rate was 99%.

The particle diameter, particle size distribution, and surface acid content of the particulate polymer in the obtained binder composition and also the content of emulsifier and the content of antioxidant in the binder composition were measured. The results are shown in Table 1.

<Production of slurry composition for non-aqueous secondary battery negative electrode>

A planetary mixer was charged with 97 parts of natural graphite (theoretical capacity: 360 mAh/g) as a negative electrode active material and 1 part (in terms of solid content) of carboxymethyl cellulose (CMC) as a thickener. These materials were diluted to a solid content concentration of 60% with deionized water and were subsequently kneaded at a rotation speed of 45 rpm for 60 minutes. Thereafter, 1.5 parts in terms of solid content of the binder composition for a negative electrode obtained as described above was loaded into the planetary mixer, and a further 40 minutes of kneading was performed at a rotation speed of 40 rpm. In addition, deionized water was added to adjust the viscosity (measured by B-type viscometer; temperature: 25°C; rotor speed: 60 rpm) to $3,000 \pm 500$ mPa·s and thereby produce a slurry composition for a negative electrode.

<Formation of negative electrode>

The slurry composition for a negative electrode was applied onto electrolytic copper foil of 15 $\mu$m in thickness serving as a current collector by a comma coater such as to have a coating weight of $11 \pm 0.5$ mg/cm$^2$. The copper foil with the slurry composition for a negative electrode applied thereon was then conveyed inside an oven having a temperature of 1200°C for 2 minutes and an oven having a temperature of 130°C for 2 minutes at a speed of 400 mm/min so as to dry the slurry composition on the copper foil and thereby obtain a negative electrode web including a negative electrode mixed material layer formed on the current collector.

The negative electrode mixed material layer-side of the produced negative electrode web was subsequently roll pressed in an environment having a temperature of $25 \pm 3$°C to obtain a negative electrode having a negative electrode mixed material layer density of 1.60 g/cm$^3$. The dusting resistance, heat resistance, and peel strength of the negative electrode obtained in this manner were evaluated. The results are shown in Table 1.

<Formation of positive electrode>

A planetary mixer was charged with 97 parts of an active material NMC532 (LiNi$_{5/10}$Co$_{2/10}$Mn$_{3/10}$O$_2$) based on a lithium complex oxide of Co-Ni-Mn as a positive electrode active material, 1 part of acetylene black (produced by Denka Company Limited; product name: HS-100) as a conductive material, and 2 parts (in terms of solid content) of polyvinylidene fluoride (produced by Kureha Corporation; product name: #7208) as a binder, and was used to mix these materials. In addition, N-methyl-2-pyrrolidone (NMP) was gradually added as an organic solvent and was mixed therewith by stirring at a temperature of $25 \pm 3$°C and a rotation speed of 25 rpm to yield a slurry composition for a positive electrode having a viscosity (measured by B-type viscometer; temperature: $25 \pm 3$°C; rotor: M4; rotor speed: 60 rpm) of 3,600 mPa·s.

The obtained slurry composition for a positive electrode was applied onto aluminum foil of 20 $\mu$m in thickness serving as a current collector by a comma coater such as to have a coating weight of $20 \pm 0.5$ mg/cm$^2$. The aluminum foil was then conveyed inside an oven having a temperature of 120°C for 2 minutes and an oven having a temperature of 130°C for 2 minutes at a speed of 200 mm/min so as to dry the slurry composition on the aluminum foil and thereby obtain a positive electrode web including a positive electrode mixed material layer formed on the current collector.

The positive electrode mixed material layer-side of the produced positive electrode web was subsequently roll pressed in an environment having a temperature of $25 \pm 3$°C to obtain a positive electrode having a positive electrode mixed material layer density of 3.20 g/cm$^3$.

<Preparation of separator>

A separator made of a single layer of polypropylene (produced by Celgard, LLC.; product name: Celgard 2500) was prepared as a separator composed of a separator substrate.

<Production of lithium ion secondary battery>

The negative electrode, positive electrode, and separator described above were used to produce a single-layer laminate cell (initial design discharge capacity equivalent to 30 mAh), were then arranged inside aluminum packing, and were subjected to vacuum drying under conditions of 10 hours at 60°C. Thereafter, $LiPF_6$ solution of 1.0 M in concentration (solvent: mixed solvent of ethylene carbonate (EC)/diethyl carbonate (DEC) = 5/5 (volume ratio); additive: containing 2 volume% (solvent ratio) of vinylene carbonate) was loaded into the aluminum packing as an electrolyte solution. The aluminum packing was then closed by heat sealing at a temperature of 150°C to tightly seal an opening of the aluminum packing, and thereby produce a lithium ion secondary battery. This lithium ion secondary battery was used to evaluate internal resistance as previously described. The result is shown in Table 1.

(Example 2)

A binder composition for a negative electrode, a slurry composition for a negative electrode, a negative electrode, a positive electrode, a separator, and a lithium ion secondary battery were prepared or produced in the same way as in Example 1 with the exception that the amount of styrene as an aromatic vinyl monomer was changed to 45.0 kg and the amount of 1,3-butadiene as an aliphatic conjugated diene monomer was changed to 55.0 kg in production of the binder composition for a non-aqueous secondary battery negative electrode. Evaluations were conducted in the same manner as in Example 1. The results are shown in Table 1.

(Example 3)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

[Production of cyclohexane solution of block polymer]

A block polymer solution was produced in the same way as in Example 1 with the exception that the dried product containing the block polymer was dissolved in cyclohexane such that the solid content concentration was 10%.

[Phase-inversion emulsification]

With the exception that the block polymer solution obtained as described above was used and the additive amount of sodium alkylbenzene sulfonate aqueous solution as an emulsifier was changed to 2,800 g, phase-inversion emulsification was performed in the same way as in Example 1 to yield a water dispersion containing a particulate block polymer (block polymer latex).

[Graft polymerization and cross-linking]

With the exception that the block polymer latex obtained as described above was used, graft polymerization and cross-linking were performed in the same way as in Example 1 to produce a binder composition.

(Example 4)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

[Production of cyclohexane solution of block polymer]

A block polymer solution was produced in the same way as in Example 1 with the exception that the dried product containing the block polymer was dissolved in cyclohexane such that the solid content concentration was 10%.

[Phase-inversion emulsification]

With the exception that the block polymer solution obtained as described above was used and the additive amount of sodium alkylbenzene sulfonate aqueous solution as an emulsifier was changed to 2,100 g, phase-inversion emulsification was performed in the same way as in Example 1 to yield a water dispersion containing a particulate block polymer (block polymer latex).

[Graft polymerization and cross-linking]

With the exception that the block polymer latex obtained as described above was used, graft polymerization and cross-linking were performed in the same way as in Example 1 to produce a binder composition.

(Example 5)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

[Production of cyclohexane solution of block polymer]

A block polymer solution was produced in the same way as in Example 1 with the exception that the dried product containing the block polymer was dissolved in cyclohexane such that the solid content concentration was 13%.

[Phase-inversion emulsification]

With the exception that the block polymer solution obtained as described above was used and the additive amount of sodium alkylbenzene sulfonate aqueous solution as an emulsifier was changed to 3,640 g, phase-inversion emulsification was performed in the same way as in Example 1 to yield a water dispersion containing a particulate block polymer (block polymer latex).

[Graft polymerization and cross-linking]

With the exception that the block polymer latex obtained as described above was used, graft polymerization and cross-linking were performed in the same way as in Example 1 to produce a binder composition.

(Example 6)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

[Production of cyclohexane solution of block polymer]

A block polymer solution was produced in the same way as in Example 1 with the exception that the dried product containing the block polymer was dissolved in cyclohexane such that the solid content concentration was 15%.

[Phase-inversion emulsification]

With the exception that the block polymer solution obtained as described above was used and the additive amount of sodium alkylbenzene sulfonate aqueous solution as an emulsifier was changed to 4,200 g, phase-inversion emulsification was performed in the same way as in Example 1 to yield a water dispersion containing a particulate block polymer (block polymer latex).

[Graft polymerization and cross-linking]

With the exception that the block polymer latex obtained as described above was used, graft polymerization and cross-linking were performed in the same way as in Example 1 to produce a binder composition.

(Example 7)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

[Production of cyclohexane solution of block polymer]

A block polymer solution was produced in the same way as in Example 1 with the exception that the dried product containing the block polymer was dissolved in cyclohexane such that the solid content concentration was 3%.

[Phase-inversion emulsification]

With the exception that the block polymer solution obtained as described above was used and the additive amount of sodium alkylbenzene sulfonate aqueous solution as an emulsifier was changed to 1,250 g, phase-inversion emulsification was performed in the same way as in Example 1 to yield a water dispersion containing a particulate block polymer (block polymer latex).

[Graft polymerization and cross-linking]

With the exception that the block polymer latex obtained as described above was used, graft polymerization and cross-linking were performed in the same way as in Example 1 to produce a binder composition.

(Example 8)

A binder composition for a negative electrode, a slurry composition for a negative electrode, a negative electrode, a positive electrode, a separator, and a lithium ion secondary battery were prepared or produced in the same way as in Example 1 with the exception that isoprene was used instead of 1,3-butadiene as an aliphatic conjugated diene monomer in production of the binder composition for a non-aqueous secondary battery negative electrode. Evaluations were conducted in the same manner as in Example 1. The results are shown in Table 1.

(Example 9)

A negative electrode, a positive electrode, a separator, and a lithium ion secondary battery were prepared or produced in the same way as in Example 1 with the exception that a binder composition for a non-aqueous secondary battery negative electrode and a slurry composition for a non-aqueous secondary battery negative electrode produced as described below were used. Evaluations were conducted in the same manner as in Example 1. The results are shown in Table 1.

<Production of binder composition for non-aqueous secondary battery negative electrode>

[Production of cyclohexane solution of block polymer and phase-inversion emulsification]

A block polymer solution was produced and a block polymer latex was obtained in the same way as in Example 1. This block polymer latex was used as a binder composition for a non-aqueous secondary battery negative electrode without performing graft polymerization and cross-linking.

<Production of slurry composition for non-aqueous secondary battery negative electrode>

With the exception that the binder composition described above was used and 1 part of sodium polyacrylate (weight-average molecular weight: 5,000) as a water-soluble polymer was also added at the time of addition of 1 part (in terms of solid content) of carboxymethyl cellulose (CMC) as a thickener, a slurry composition was produced in the same way as in Example 1.

(Example 10)

A binder composition for a negative electrode, a slurry composition for a negative electrode, a negative electrode, a positive electrode, a separator, and a lithium ion secondary battery were prepared or produced in the same way as in Example 1 with the exception that $SiO_x$ (x = 1.1) (produced by Shin-Etsu Chemical Co., Ltd.; product name: KSC1064) was used instead of natural graphite as a negative electrode active material in production of the slurry composition for a non-aqueous secondary battery negative electrode. Evaluations were conducted in the same manner as in Example 1. The results are shown in Table 1.

(Example 11)

A slurry composition was produced in the same way as in Example 10 with the exception that 1 part of sodium polyacrylate (weight-average molecular weight: 5,000) as a water-soluble polymer was also added at the time of addition of 1 part (in terms of solid content) of carboxymethyl cellulose (CMC) as a thickener in production of the slurry composition for a non-aqueous secondary battery negative electrode. Evaluations were conducted in the same manner as in Example 1. The results are shown in Table 1.

(Example 12)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

[Production of cyclohexane solution of block polymer]

A block polymer solution was produced in the same way as in Example 1 with the exception that the dried product containing the block polymer was dissolved in cyclohexane such that the solid content concentration was 4.0%.

[Phase-inversion emulsification]

With the exception that the block polymer solution obtained as described above was used and the additive amount of sodium alkylbenzene sulfonate aqueous solution as an emulsifier was changed to 1,067 g, phase-inversion emulsification was performed in the same way as in Example 1 to yield a water dispersion containing a particulate block polymer (block polymer latex).

[Graft polymerization and cross-linking]

With the exception that the block polymer latex obtained as described above was used, graft polymerization and cross-linking were performed in the same way as in Example 1 to produce a binder composition.

(Comparative Example 1)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

A reactor was charged with 150 parts of deionized water, 0.1 parts of sodium alkylbenzene sulfonate aqueous solution (concentration: 16%) as an emulsifier, 30 parts of styrene as an aromatic vinyl monomer, and 0.5 parts of t-dodecyl mercaptan as a molecular weight modifier in this order. Gas inside the reactor was then purged three times with nitrogen, and 70 parts of 1,3-butadiene as an aliphatic conjugated diene monomer was subsequently added. The reactor was held at 60°C while 0.5 parts of potassium persulfate as a polymerization initiator was added to initiate a polymerization reaction that was then continued under stirring. At the point at which the polymerization conversion rate reached 96%, cooling was performed and 0.1 parts of hydroquinone aqueous solution (concentration: 10%) as a polymerization inhibitor was added to quench the polymerization reaction.
Residual monomer was subsequently removed using a rotary evaporator having a water temperature of 60°C to yield a binder composition.

(Comparative Example 2)

A binder composition for a negative electrode, a slurry composition for a negative electrode, a negative electrode, a positive electrode, a separator, and a lithium ion secondary battery were prepared or produced in the same way as in Example 1 with the exception that the additive amount of sodium alkylbenzene sulfonate aqueous solution as an emulsifier was changed to 350 g in production of the binder composition for a non-aqueous secondary battery negative electrode. Evaluations were conducted in the same manner as in Example 1. The results are shown in Table 1.

(Comparative Example 3)

A slurry composition for a negative electrode, a negative electrode, a positive electrode, a separator, and a lithium ion secondary battery were prepared or produced in the same way as in Example 1 with the exception that a binder composition for a non-aqueous secondary battery negative electrode produced as described below was used. Evaluations were conducted in the same manner as in Example 1. The results are shown in Table 1.

<Production of binder composition for non-aqueous secondary battery negative electrode>

[Production of cyclohexane solution of block polymer]

A block polymer solution was produced in the same way as in Example 1.

[Phase-inversion emulsification]

Sodium alkylbenzene sulfonate was dissolved in deionized water to produce a 0.15% aqueous solution.
After loading 1,000 g of the block polymer solution obtained as described above and 1,400 g of the obtained aqueous solution into a tank, preliminary mixing thereof was performed by stirring. Next, the preliminary mixture was transferred from the tank to a continuous high-performance emulsifying/dispersing device (produced by Pacific Machinery & Engineering Co., Ltd.; product name: Cavitron) at a rate of 100 g/min using a metering pump and was stirred at a rotation speed of 20,000 rpm (number of passes: 5) so as to perform phase-inversion emulsification of the preliminary mixture to obtain an emulsion.
Next, cyclohexane in the obtained emulsion was evaporated under reduced pressure in a rotary evaporator. The emulsion that had been subjected to evaporation was subsequently subjected to 10 minutes of centrifugation at 7,000 rpm in a centrifuge (produced by Hitachi Koki Co., Ltd.; product name: Himac CR21N), and then the upper layer portion was withdrawn to perform concentration.
Finally, the upper layer portion was filtered through a 100-mesh screen to obtain a water dispersion containing a particulate block polymer (block polymer latex).

[Graft polymerization and cross-linking]

With the exception that the block polymer latex obtained as described above was used, graft polymerization and cross-linking were performed in the same way as in Example 1 to produce a binder composition.

In Table 1, shown below:

"ST" indicates styrene unit;
"BD" indicates 1,3-butadiene unit;
"IP" indicates isoprene unit;
"MAA" indicates methacrylic acid unit;
"LAS-Na" indicates sodium alkylbenzene sulfonate;
"H1" indicates 4-[[4,6-bis(octylthio)-1,3,5-triazin-2-yl]amino]-2,6-di-tert-butylphenol (hindered phenol antioxidant);
"P1" indicates 3,9-bis(octadecyloxy)-2,4,8,10-tetraoxa-3,9-diphosphaspiro[5.5]undecane (phosphite antioxidant);
"PAA-Na" indicates sodium polyacrylate;
"High-pressure" indicates high-pressure emulsifying/dispersing device; and
"Continuous" indicates continuous emulsifying/dispersing device.

Also note that the proportional content (mass%) of each monomer unit is indicated as a value for which the first decimal place is rounded in Table 1.

Table 1

| | | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 |
|---|---|---|---|---|---|---|---|---|---|---|---|---|---|---|---|---|---|---|
| Particulate polymer | Polymer | Aromatic vinyl block region | Type | ST | ST | ST | ST | ST | ST | ST | ST | ST | ST | ST | ST | | ST | ST |
| | | | Proportional content [mass %] | 29 | 43 | 29 | 29 | 29 | 29 | 29 | 29 | 30 | 29 | 29 | 29 | ST: 30 BD: 70 | 29 | 29 |
| | | Conjugated diene/akylene | Type | BD | BD | BD | BD | BD | BD | BD | IP | BD | BD | BD | BD | | BD | BD |
| | | | Proportional content [mass %] | 67 | 53 | 67 | 67 | 67 | 67 | 67 | 67 | 70 | 67 | 67 | 67 | | 67 | 67 |
| | | Other region (graft portion) | Type | MAA | MAA | MAA | MAA | MAA | MAA | MAA | MAA | - | MAA | MAA | MAA | | MAA | MAA |
| | | | Proportional content [mass %] | 4 | 4 | 4 | 4 | 4 | 4 | 4 | 4 | 0 | 4 | 4 | 4 | | 4 | 4 |
| | | Structure | | Block | Block | Block | Block | Block | Block | Block | Block | Block | Block | Block | Block | Random | Block | Block |
| | | Volume-average particle diameter [μm] | | 0.5 | 0.5 | 0.7 | 0.5 | 0.7 | 0.8 | 0.2 | 0.5 | 0.5 | 0.5 | 0.5 | 0.4 | 0.2 | 1.2 | 1.2 |

29

EP 3 981 812 B1

(continued)

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 |
|---|---|---|---|---|---|---|---|---|---|---|---|---|---|---|---|---|---|
| Binder composition | | Particle size distribution | 3.5 | 3.5 | 3.5 | 5.5 | 8 | 10 | 3.5 | 3.5 | 3.5 | 3.5 | 3.5 | 3.5 | 2 | 4 | 11 |
| | | Surface acid content [mmol/g] | 0.3 | 0.3 | 0.3 | 0.3 | 0.3 | 0.3 | 0.3 | 0.3 | 0 | 0.3 | 0.3 | 0.3 | 0 | 0.3 | 0.3 |
| Slurry composition | Emulsifier | Type | LAS-Na | LAS-Na | LAS-Na | LAS-Na | LAS-Na | LAS-Na | LAS-Na | LAS-Na | LAS-Na | LAS-Na | LAS-Na | LAS-Na | LAS-Na | LAS-Na | LAS-Na |
| | | Content (per 100 parts by mass of particulate polymer) [parts by mass] | 4 | 4 | 4 | 3 | 4 | 4 | 6 | 4 | 4 | 4 | 4 | 4 | 4 | 1 | 4 |
| | Antioxidant | Type | H1 | H1 | H1 | H1 | H1 | H1 | H1 | H1 | H1 | H1 | H1 | H1 | H1 | H1 | H1 |
| | | Content (per 100 parts by mass of particulate polymer) [parts by mass] | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| | | Type | P1 | P1 | P1 | P1 | P1 | P1 | P1 | P1 | P1 | P1 | P1 | P1 | P1 | P1 | P1 |
| | | Content (per 100 parts by mass of particulate polymer) [parts by mass] | 0.09 | 0.09 | 0.09 | 0.09 | 0.09 | 0.09 | 0.09 | 0.09 | 0.09 | 0.09 | 0.09 | 0.09 | 0.09 | 0.09 | 0.09 |
| | | H1/P1 [mass ratio] | 0.56 | 0.56 | 0.56 | 0.56 | 0.56 | 0.56 | 0.56 | 0.56 | 0.56 | 0.56 | 0.56 | 0.56 | 0.56 | 0.56 | 0.56 |
| | | Emulsifying/dispersing device | High-pressure | High-pressure | High-pressure | High-pressure | High-pressure | High-pressure | High-pressure | High-pressure | High-pressure | High-pressure | High-pressure | High-pressure | - | High-pressure | Continuous |

(continued)

| | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 |
|---|---|---|---|---|---|---|---|---|---|---|---|---|---|---|---|---|
| Water-soluble polymer | Type | - | - | - | - | - | - | - | - | PAA-Na | - | PAA-Na | - | - | - | - |
| | Content (per 100 parts by mass of negative electrode active material) [parts by mass] | 0 | 0 | 0 | 0 | 0 | 0 | 0 | 0 | 1 | 0 | 1 | 0 | 0 | 0 | 0 |
| Negative electrode active material | | Graphite | Graphite | Graphite | Graphite | Graphite | Graphite | Graphite | Graphite | Graphite | $SiO_x$ | $SiO_x$ | Graphite | Graphite | Graphite | Graphite |
| Evaluation | Heat resistance of electrode | A | A | B | B | B | B | B | B | B | A | A | A | A | C | C |
| | Peel strength of electrode | A | B | A | A | B | B | A | A | B | B | A | A | D | C | C |
| | Internal resistance of secondary battery | A | A | A | A | A | B | B | A | B | A | A | A | D | B | C |
| | Dusting resistance of electrode | A | B | B | A | B | B | B | A | A | A | A | A | C | C | C |

It can be seen from Table 1 that it was possible to produce an electrode having excellent peel strength and heat resistance and a secondary battery having reduced internal resistance in each of Examples 1 to 12 in which the used binder composition contained a particulate polymer that included a block region formed of an aromatic vinyl monomer unit, included an aliphatic conjugated diene monomer unit, and had a volume-average particle diameter and particle size distribution that were within specific ranges.

On the other hand, it can be seen that peel strength of an electrode could not be sufficiently ensured and a secondary battery having reduced internal resistance could not be produced in Comparative Example 1 in which the used binder composition contained a particulate polymer that was formed of a random polymer.

It can also be seen that peel strength and heat resistance of an electrode could not be sufficiently ensured in Comparative Example 2 in which the used binder composition contained a particulate polymer that had a volume-average particle diameter that was outside of the specific range.

It can also be seen that peel strength and heat resistance of an electrode could not be sufficiently ensured and a secondary battery having reduced internal resistance could not be produced in Comparative Example 3 in which the used binder composition contained a particulate polymer that had a volume-average particle diameter and a particle size distribution that were outside of the specific ranges.

INDUSTRIAL APPLICABILITY

According to the present disclosure, it is possible to provide a binder composition for a non-aqueous secondary battery electrode and a slurry composition for a non-aqueous secondary battery electrode with which it is possible to form an electrode for a non-aqueous secondary battery that has excellent peel strength and heat resistance and that can reduce internal resistance of a non-aqueous secondary battery.

Moreover, according to the present disclosure, it is possible to provide an electrode for a non-aqueous secondary battery that has excellent peel strength and heat resistance and can reduce internal resistance of a non-aqueous secondary battery.

Furthermore, according to the present disclosure, it is possible to provide a non-aqueous secondary battery that has reduced internal resistance.

**Claims**

1. A binder composition for a non-aqueous secondary battery electrode comprising:

    a particulate polymer formed of a polymer that includes a block region formed of an aromatic vinyl monomer unit and that includes either or both of an aliphatic conjugated diene monomer unit and an alkylene structural unit; and
    water, wherein
    the particulate polymer has a volume-average particle diameter of not less than 0.1 $\mu$m and less than 0.9 $\mu$m, the volume-average particle diameter being determined according to the Example <Volume-average particle diameter of particulate polymer>, and
    the particulate polymer has a particle size distribution of not less than 3 and not more than 10, the particle size distribution being determined according to the Example <Particle size distribution of particulate polymer>.

2. The binder composition for a non-aqueous secondary battery electrode according to claim 1, wherein the volume-average particle diameter is not less than 0.2 $\mu$m and less than 0.7 $\mu$m, the volume-average particle diameter being determined according to the Example <Volume-average particle diameter of particulate polymer>, and the particle size distribution is not less than 3.2 and not more than 8, the particle size distribution being determined according to the Example <Particle size distribution of particulate polymer>.

3. The binder composition for a non-aqueous secondary battery electrode according to claim 1 or 2, further comprising not less than 2 parts by mass and not more than 6 parts by mass of an emulsifier per 100 parts by mass of the particulate polymer.

4. The binder composition for a non-aqueous secondary battery electrode according to any one of claims 1 to 3, wherein the aromatic vinyl monomer unit constitutes a proportion of 10 mass% or more in the polymer.

5. The binder composition for a non-aqueous secondary battery electrode according to any one of claims 1 to 4, further comprising either or both of a hindered phenol antioxidant and a phosphite antioxidant.

6. The binder composition for a non-aqueous secondary battery electrode according to any one of claims 1 to 5, further comprising a water-soluble polymer.

7. A slurry composition for a non-aqueous secondary battery electrode comprising:

    an electrode active material; and
    the binder composition for a non-aqueous secondary battery electrode according to any one of claims 1 to 6.

8. An electrode for a non-aqueous secondary battery comprising an electrode mixed material layer formed using the slurry composition for a non-aqueous secondary battery electrode according to claim 7.

9. A non-aqueous secondary battery comprising the electrode for a non-aqueous secondary battery according to claim 8.


**Patentansprüche**

1. Eine Bindemittelzusammensetzung für eine Elektrode einer nicht-wässrigen Sekundärbatterie, umfassend:

    ein partikelförmiges Polymer, geformt aus einem Polymer welches eine Blockregion hergestellt aus einer Vinylaromaten-Monomereinheit umfasst, und welches eines oder beide aus einer aliphatischen konjugierten Dien-Monomereinheit und einer Alkylen-Struktureinheit umfasst; und
    Wasser, wobei
    das partikelförmige Polymer einen volumengemittelten Partikeldurchmesser von nicht weniger als 0,1 $\mu$m und weniger als 0,9 $\mu$m hat, wobei der volumengemittelte Partikeldurchmesser bestimmt wird gemäß dem Beispiel <Volume-average particle diameter of particulate polymer>, und
    das partikelförmige Polymer eine Partikelgrößenverteilung von nicht weniger als 3 und nicht mehr als 10 hat, wobei die Partikelgrößenverteilung bestimmt wird gemäß dem Beispiel <Particle size distribution of particulate polymer>.

2. Die Bindemittelzusammensetzung für eine Elektrode einer nicht-wässrigen Sekundärbatterie gemäß Anspruch 1, wobei der volumengemittelte Partikeldurchmesser nicht weniger als 0,2 $\mu$m und weniger als 0,7 $\mu$m beträgt, wobei der volumengemittelte Partikeldurchmesser bestimmt wird gemäß dem Beispiel <Volume-average particle diameter of particulate polymer>, und die Partikelgrößenverteilung nicht weniger als 3,2 und nicht mehr als 8 beträgt, wobei die Partikelgrößenverteilung bestimmt wird gemäß dem Beispiel <Particle size distribution of particulate polymer>.

3. Die Bindemittelzusammensetzung für eine Elektrode einer nicht-wässrigen Sekundärbatterie gemäß Anspruch 1 oder 2, außerdem umfassend nicht weniger als 2 Gewichtsteile und nicht mehr als 6 Gewichtsteile eines Emulgators pro 100 Gewichtsteilen des partikelförmigen Polymers.

4. Die Bindemittelzusammensetzung für eine Elektrode einer nicht-wässrigen Sekundärbatterie gemäß irgendeinem der Ansprüche 1 bis 3, wobei die Vinylaromaten-Monomereinheit einem Anteil von 10 Gew.% oder mehr am Polymer hat.

5. Die Bindemittelzusammensetzung für eine Elektrode einer nicht-wässrigen Sekundärbatterie gemäß irgendeinem der Ansprüche 1 bis 4, außerdem umfassend eines oder beide aus einem gehinderten Phenolantioxidans und einem Phosphit-Antioxidans.

6. Die Bindemittelzusammensetzung für eine Elektrode einer nicht-wässrigen Sekundärbatterie gemäß irgendeinem der Ansprüche 1 bis 5, außerdem umfassend ein wasserlösliches Polymer.

7. Eine Schlämmezusammensetzung für eine Elektrode einer nicht-wässrigen Sekundärbatterie, umfassend:

    ein elektrodenaktives Material; und
    die Bindemittelzusammensetzung für eine Elektrode einer nicht-wässrigen Sekundärbatterie gemäß irgendeinem der Ansprüche 1 bis 6.

8. Eine Elektrode für eine nicht-wässrige Sekundärbatterie umfassend eine Materialmix-Elektrodenschicht, hergestellt mit der Schlämmezusammensetzung für eine Elektrode einer nicht-wässrigen Sekundärbatterie gemäß Anspruch 7.

9. Eine nicht-wässrige Sekundärbatterie umfassend die Elektrode für eine nicht-wässrige Sekundärbatterie gemäß Anspruch 8.

**Revendications**

1. Composition de liant pour une électrode de batterie rechargeable non aqueuse, comprenant :

   un polymère particulaire formé d'un polymère qui contient une région de bloc formée d'un motif monomère vinyle aromatique et qui contient l'un ou l'autre ou les deux parmi un motif monomère diène conjugué aliphatique et un motif structurel alkylène ; et
   de l'eau, dans laquelle
   le polymère particulaire a une granulométrie moyenne en volume non inférieure à 0,1 $\mu$m et inférieure à 0,9 $\mu$m, la granulométrie moyenne en volume étant déterminée conformément à l'Exemple <Granulométrie moyenne en volume du polymère particulaire>, et
   le polymère particulaire a une distribution de granulométrie non inférieure à 3 et non supérieure à 10, la distribution de granulométrie étant déterminée conformément à l'Exemple <Distribution de granulométrie du polymère particulaire>.

2. Composition de liant pour une électrode de batterie rechargeable non aqueuse selon la revendication 1, dans laquelle la granulométrie moyenne en volume est non inférieure à 0,2 $\mu$m et inférieure à 0,7 $\mu$m, la granulométrie moyenne en volume étant déterminée conformément à l'Exemple <Granulométrie moyenne en volume du polymère particulaire>, et la distribution de granulométrie est non inférieure à 3,2 et non supérieure à 8, la distribution de granulométrie étant déterminée conformément à l'Exemple <Distribution de granulométrie du polymère particulaire>.

3. Composition de liant pour une électrode de batterie rechargeable non aqueuse selon la revendication 1 ou 2, comprenant en outre au moins 2 parties en masse et au plus 6 parties en masse d'un émulsifiant pour 100 parties en masse du polymère particulaire.

4. Composition de liant pour une électrode de batterie rechargeable non aqueuse selon l'une quelconque des revendications 1 à 3, dans laquelle le motif monomère vinyle aromatique constitue une proportion de 10 % en masse ou plus dans le polymère.

5. Composition de liant pour une électrode de batterie rechargeable non aqueuse selon l'une quelconque des revendications 1 à 4, comprenant en outre l'un ou l'autre ou les deux parmi un antioxydant de type phénol encombré et un antioxydant de type phosphite.

6. Composition de liant pour une électrode de batterie rechargeable non aqueuse selon l'une quelconque des revendications 1 à 5, comprenant en outre un polymère soluble dans l'eau.

7. Composition de bouillie pour une électrode de batterie rechargeable non aqueuse, comprenant :

   un matériau actif d'électrode ; et
   la composition de liant pour une électrode de batterie rechargeable non aqueuse de l'une quelconque des revendications 1 à 6.

8. Electrode pour une batterie rechargeable non aqueuse, comprenant une couche de matériau mixte d'électrode formée par utilisation de la composition de bouillie pour une électrode de batterie rechargeable non aqueuse de la revendication 7.

9. Batterie rechargeable non aqueuse comprenant l'électrode pour une batterie rechargeable non aqueuse de la revendication 8.

# FIG. 1

Electrical conductivity (mS)

A1          A2          A3

Cumulative amount of added hydrochloric acid (mmol)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017056404 A1

- JP 2012204303 A